# EUROPEAN PATENT APPLICATION

(11) **EP 1 478 172 A1**
(43) Date of publication of application: **17.11.2004**
(21) Application number: 04011414.2
(22) Date of filing: 13.05.2004
(51) Int. Cl.: H04N 5/00

(54) **Single-chip cable set-top box**

(30) Priority: 13.05.2003 US 436079
(71) Applicant: Broadcom Corporation, Irvine, California 92618-7013 (US)
(72) Inventor: Kaylani, Tarek, Irvine CA 92606 (US)
(74) Representative: Jehle, Volker Armin, Dipl.-Ing.

(57) **Abstract**

A single integrated circuit is provided to enable the distribution of voice, video, and/or data services throughout a multimedia distribution network, such as a cable communications network. The single integrated circuit supports both digital and analog television services (e.g., PVR, pay-for-view, EPG, e-commerce, etc.) and computer data services (e.g., telephony, Internet browsing, facsimile, messaging, videoconferencing, etc.). In an embodiment, the single integrated circuit includes three components that constitute a DOCSIS™ compliant cable modem, namely a digital inband demodulator, a digital upstream burst modulator, a media access controller, and a microprocessor. In an embodiment, a digital out-of-band demodulator is also included. In another embodiment, the single integrated circuit integrates front-end and backend set-top box functionality in addition to DOCSIS™ cable modem functionality. The set-top box implementation includes at least a front-end transceiver, a backend video decoder, a media access controller, and a microprocessor.

## Description

### BACKGROUND OF THE INVENTION

### Field of the Invention

The present invention relates generally to communications networking, and more specifically, to media access control processing within a communications network.

### Related Art

Cable service providers are expanding the variety of services offered to their subscribers. Traditionally, cable providers, for instance, delivered local and network broadcast, premium and pay-for-view channels, and newscasts into a subscriber's home. Cable providers are starting to offer more services to subscribers over the same cable infrastructure to the home. Some modem cable providers have augmented their portfolio of services to include telephony, messaging, electronic commerce, interactive gaming, and Internet services. As such, a cable provider can offer interactive services to allow subscribers to check email or order products while watching television.

As a result, system developers are being challenged to make available adequate bandwidth to support the timely delivery of these services. In other words, traditional cable broadcasts primarily require one-way.communication from a cable service provider to a subscriber's home. However, as interactive or personal television services and other nontraditional cable services continue to thrive, communications media used to support one-way communications must now contend with an increased demand for bi-directional communications. This results in a need for improved bandwidth arbitration among the subscribers' cable modems.

In a communications network, such as cable service network, a communications device (such as a modem) requests bandwidth from a headend device prior to transmitting data to its destination. Thus, the headend device serves as a centralized point of control for allocating bandwidth to the communications devices. Bandwidth allocation can be based on availability and/or competing demands from other communications devices. As intimated above, sufficient bandwidth is typically available to transmit signals downstream to the communications device. However in the upstream, bandwidth is more limited and must be shared among competing communications devices.

A cable network headend typically includes a cable modem termination system (CMTS) which consists of a media access controller (MAC) and central processing unit (CPU). The MAC receives upstream signals from a transceiver that communicates with remotely located cable modems. The upstream signals are delivered to the CPU for protocol processing. The protocol processing is conventionally defined by the Data Over Cable Service Interface Specification (DOCSIS™) that governs cable communications. Depending on the nature of the protocol processing, the CPU must be able to handle these operations efficiently and timely so as to not impede performance. As more subscribers and/or services are added to the network, greater emphasis is placed on the MAC and CPU to sustain protocol processing with no interruption in service.

In the downstream, the cable modem typically includes a MAC and access to a CPU. To support the increasing demand for enhanced and interactive cable services, cable providers are beginning to deploy set-top boxes that include cable modem functionality. Set-top box systems with integrated cable modem functionality use two to three chips to implement the combined functions of a set-top, cable modem, and processor. This results in an increase of the overall cost, power requirement, and form factor (e.g., size) of the set-top box making it difficult for cable providers to deploy them to the mass market.

Therefore, a system and method are needed to address the above problems.

### SUMMARY OF THE INVENTION

The present invention solves the above problems by providing a single integrated circuit that enables the distribution of voice, video, and/or data services throughout a multimedia distribution network, such as a cable communications network. The single integrated circuit supports digital and analog television services, computer networking services, and data services. Accordingly, the single integrated circuit is configurable to host one or more services that include, but are not limited to, telephony, television broadcasts, pay-for-view, Internet communications (e.g., World Wide Web (WWW)), radio broadcasts, facsimile, file data transfer, electronic mailing services (email), messaging, videoconferencing, and live or time-delayed media feeds.

In an embodiment, the single integrated circuit is part of a cable modem. The present invention integrates three components that constitute a DOCSIS™ compliant cable modem inside a single-chip. As such, the cable modem implementation of the single integrated circuit includes a digital inband demodulator, a digital upstream burst modulator, and a media access controller. In an embodiment, a digital out-of-band demodulator is also included.

In another embodiment, the single integrated circuit is part of a cable set-top box system. The set-top box implementation integrates front-end and backend set-top box functionality in addition to DOCSIS™ cable modem functionality into a single chip. As such, the set-top box implementation of the single integrated circuit includes at least a front-end transceiver, a backend video decoder, a media access controller, and a microprocessor. The front-end transceiver transmits and receives signals over a transmission medium to a headend (such as a CMTS). The backend video decoder desamples television programming data and prepares media streams that are presented on a display (e.g., television, portable computer, etc.). The media access controller supports DOCSIS™ protocol processing of computer network information. Finally, the microprocessor provides control signals to the other components (e.g., front-end transceiver, backend video decoder, etc.) to implement digital set-top box functionality.
According to an aspect of the invention, a single integrated circuit for processing information within a multimedia distribution network comprises:
a digital inband demodulator for receiving an incoming signal, wherein said inband demodulator is coupled to the integrated circuit;
a digital upstream modulator for enabling transmission of an outgoing signal, wherein said upstream modulator is coupled to the integrated circuit; and
a media access controller for enabling DOCSIS protocol processing of said incoming signal and/or said outgoing signal, wherein said media access controller is coupled to the integrated circuit.
Advantageously, at least one of said inband demodulator, said upstream modulator, and said media access controller is embedded within the circuitry of the integrated circuit.
Advantageously, at least one of said inband demodulator, said upstream modulator, and said media access controller is attached to the integrated circuit.
Advantageously, at least one of said inband demodulator, said upstream modulator, and said media access controller is removably attached to the integrated circuit.
Advantageously, at least one of said inband demodulator, said upstream modulator, and said media access controller is coupled to a daughter chip, said daughter chip being mounted on the integrated circuit.
Advantageously, the multimedia distribution network comprises a cable modem communications network.
According to another aspect of the invention, a single integrated circuit for processing information within a multimedia distribution network comprises:
a digital inband demodulator for receiving an incoming signal, wherein said inband demodulator is coupled to the integrated circuit;
a digital upstream modulator for enabling transmission of a first outgoing signal, wherein said upstream modulator is coupled to the integrated circuit;
a digital out-of-band demodulator for receiving an incoming out-of-band signal, wherein said out-of-band demodulator is coupled to the integrated circuit; and
a media access controller for enabling DOCSIS protocol processing of said incoming signal, said first outgoing signal, and said second outgoing signal, wherein said media access controller is coupled to said integrated circuit.
According to another aspect of the invention, a single integrated circuit processing information within a multimedia distribution network comprises:
a front-end transceiver for receiving an incoming signal and/or sending an outgoing signal, wherein said front-end transceiver is coupled to the integrated circuit;
a backend decoder for processing audio, video, and/or graphics information carried in said incoming signal, wherein said backend decoder is coupled to the integrated circuit; and
a media access controller for enabling DOCSIS protocol processing of said incoming signal and said outgoing signal, wherein said media access controller is coupled to the integrated circuit.
Advantageously, said front-end transceiver comprises:
a digital inband demodulator for receiving said incoming signal.
Advantageously, said front-end transceiver comprises:
a digital upstream modulator for enabling transmission of said outgoing signal.
Advantageously, said front-end transceiver comprises:
a digital out-of-band demodulator for receiving said incoming signal.
Advantageously, said backend decoder comprises:
a transport demultiplexer for multiplexing and/or demultiplexing said audio, said video, and/or said graphics information carried in said incoming signal.
Advantageously, said backend decoder comprises:
a graphics processor for processing said graphics information carried in said incoming signal.
Advantageously, said backend decoder comprises:
a video processor for processing said video information carried in said incoming signal.
Advantageously, said backend decoder comprises:
an audio processor for processing said audio information carried in said incoming signal.
Advantageously, the integrated circuit is part of a cable modem or a cable set-top box.
According to another aspect of the invention, a single integrated circuit for processing information within a multimedia distribution network comprises:
a front-end transceiver for receiving an incoming signal and/or sending an outgoing signal, wherein said front-end transceiver is coupled to the integrated circuit;
a backend decoder for processing audio, video, and/or graphics information carried in said incoming signal, wherein said backend decoder is coupled to the integrated circuit;
a media access controller for enabling DOCSIS protocol processing of said incoming signal and said outgoing signal, wherein said media access controller is coupled to the integrated circuit; and
a microprocessor for providing control signals to said front-end transceiver and/or said backend decoder, wherein said microprocessor is coupled to the integrated circuit.
According to anotehr aspect of the invention, a method for processing information within a single integrated circuit is provided, wherein said integrated circuit is enabled to communicate over a multimedia distribution network, comprising the steps of:
demodulating an incoming signal accessed from a downstream channel of the multimedia distribution network;
enabling DOCSIS protocol processing of said incoming signal subsequent to said demodulating step; and
enabling DOCSIS protocol processing of an outgoing signal; and
modulating said outgoing signal for transmission over an upstream channel of the multimedia distribution network.
Advantageously, the method further comprises the step of:
processing audio, video, and/or graphics information carried in said incoming signal.
Advantageously, the method further comprises the step of:
enabling presentation of a media stream including said audio, video, and/or graphics information on an end-user device.
Advantageously, the method further comprises the step of:
accessing said incoming signal in accordance with a control signal designating a frequency range for receiving said incoming signal.

Advantageously, said accessing step comprises the step of:
accessing a control request from an input interface operable to receive commands from an end-user, wherein said control signal is responsive to said control request.

### BRIEF DESCRIPTION OF THE DRAWINGS/FIGURES

The accompanying drawings, which are incorporated herein and form part of the specification, illustrate the present invention and, together with the description, further serve to explain the principles of the invention and to enable a person skilled in the pertinent art to make and use the invention. In the drawings, like reference numbers indicate identical or functionally similar elements. Additionally, the leftmost digit(s) of a reference number identifies the drawing in which the reference number first appears.

FIG. 1 illustrates a multimedia distribution network according to an embodiment of the present invention.

FIG. 2 illustrates a cable modem transceiver system according to an embodiment of the present invention.

FIG. 3 illustrates a set-top box system according to another embodiment of the present invention.

FIG. 4 illustrates a set-top box system according to another embodiment of the present invention.

FIG. 5 illustrates a front-end transceiver according to an embodiment of the present invention.

FIG. 6 illustrates a front-end transceiver according to another embodiment of the present invention.

FIG. 7 illustrates a backend decoder according to an embodiment of the present invention.

FIG. 8 illustrates an operational flow for downstream processing within a single integrated chip according to an embodiment of the present invention.

FIG. 9 illustrates an operational flow for upstream processing within a single integrated chip according to an embodiment of the present invention.

FIG. 10 illustrates an example computer system useful for implementing the present invention.

### DETAILED DESCRIPTION OF THE INVENTION

### Table of Contents

I. System Overview
II. Cable Modem Implementation
III. Set-Top Box Implementation
IV. Upstream and Downstream Processing on a Single Chip
V. Exemplary System Implementation

### I. System Overview

The present invention comprises an end-user transceiver system embodied as a single integrated circuit that enables the distribution of voice, video, and/or data services throughout a multimedia distribution network. This system enables the exchange of voice, data, video, audio, messaging, graphics, other forms of media and/or multimedia, or any combination thereof.

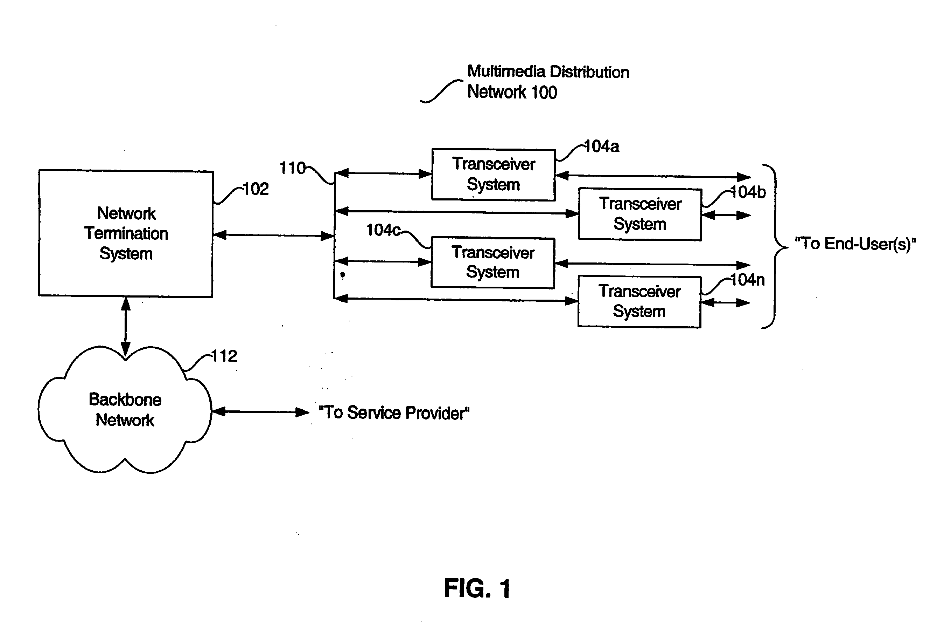

FIG. 1 illustrates a multimedia distribution network 100 according to an embodiment of the present invention. Multimedia distribution network 100 includes a network termination system 102 and one or more widely distributed end-user transceiver systems 104a-104n (collectively referred to herein as "transceiver system 104"). Network termination system 102 is positioned to command and control interactions with and among transceiver system 104 over internodal infrastructure 110. Network termination system 102 also communicates with one or more service providers (not shown) over backbone network 112.

In an embodiment, at least one transceiver system 104 is part of cable modem and/or a cable set-top box, provided as a single integrated circuit. Transceiver system 104 is configurable to host one or more services to a subscriber or other end-users. The services include telephony, television broadcasts, pay-for-view, Internet communications (e.g., World Wide Web (WWW)), radio broadcasts, facsimile, file data transfer, electronic mailing services (email), messaging, videoconferencing, live or time-delayed media feeds (such as, speeches, debates, presentations, infomercials, news reports, sporting events, concerts, etc.), or the like. In embodiments, the cable modem implementation of transceiver system 104 performs protocol processes defined by the CableLabs® Certified™ Cable Modem project, formerly known as the Data Over Cable Service Interface Specification (DOCSIS™), that specifies interface requirements for cable communications.

In embodiments, transceiver system 104 comprises a cable modem disposed inside a single-chip set-top box system. The single-chip architecture of transceiver system 104 enables, for example, interactive, personal, and/or enhanced television functionality, and/or broadband Internet access. Other components incorporated into the single-chip design of transceiver system 104 includes a personal video recorder (PVR), a high performance MIPS® processor, an advanced graphics engine, and technology for mixed-signal integration.

In embodiments, transceiver system 104 enables home networking technology to be integrated with the present invention. As such, in an embodiment, transceiver system 104 is compliant with Ethernet networks (e.g., as specified in IEEE standard 802.3), WiFi™ wireless networks (e.g., as specified in IEEE standard 802.11 (b)), and/or the like. In an embodiment, transceiver system 104 enables communications technologies made available from the Home Phone Networking Alliance (HomePNA) or the like. HomePNA technologies enable the operation of telephone services and home networking, including, but not limited to, videoconferencing, video security, VoIP telephony, digital video networking, internet sharing, and multi-user gaming.

As a cable modem and/or set-top box system, transceiver system 104 permits corresponding end-users (not shown) to communicate with service providers (not shown) through network termination system 102. In an embodiment, network termination system 102 is a component of a headend controller, such as a cable modem termination system (CMTS) or a part thereof. In an embodiment, network termination system 102 and transceiver system 104 are integrated to support protocols such as, Internet Protocol (IP), Transmission Control Protocol (TCP), User Datagram Protocol (UDP), Real Time Transport Protocol (RTP), Resource Reservation Protocol (RSVP), or the like.

Internodal infrastructure 110 provides communications between network termination system 102 and transceiver system 104. Internodal infrastructure 110 supports wired, wireless, or both transmission media, including satellite, terrestrial (e.g., fiber optic, copper, twisted pair, coaxial, hybrid fiber-coaxial (HFC), or the like), radio; microwave, free-space optic, and/or any other form or method of transmission. As such, internodal infrastructure 110 can be part of a wired and/or wireless local area network (LAN), metropolitan area network (MAN), wide area network (WAN), and/or optical network, including, but not limited to; fiber to the building (FTTB), fiber to the curb (FTTC), fiber to the home (FTTH), and/or fiber to the neighborhood (FTTN) networks.

All communications transmitted in the direction from network termination system 102 towards transceiver system 104 are referred to as being in the downstream. In an embodiment, the downstream is divided into one or more downstream channels. Each downstream channel is configured to carry various types of information to transceiver system 104. Such downstream information includes television signals, data packets (including IP datagrams), voice packets, control messages, and/or the like. In an embodiment, the downstream is formatted in accordance with a motion picture expert group (MPEG) transmission convergence sublayer. However, the present invention can be configured to support other data formats, such as the digital video broadcasting (DVB) standards for video, AC-3 coding for audio, or the like. In an embodiment, network termination system 102 implements time division multiplexing (TDM) to transmit continuous point-to-multipoint signals in the downstream.

The upstream represents all communications from transceiver system 104 towards network termination system 102. In an embodiment, the upstream is divided into one or more upstream channels. Each upstream channel carries bursts from transceiver system 104 to network termination system 102. In the upstream, each channel is partitioned into multiple assignable slots, and transceiver system 104 sends a time division multiple access (TDMA) burst signal in an assigned slot.

TDM and TDMA are described herein by way of example. It should be understood that the present invention is configurable to support other transmission modulation standards, including, but not limited to, Synchronous Code Division Multiple Access (S-CDMA).

As discussed, network termination system 102, in embodiments, interacts with service providers (not shown) over backbone network 112. Backbone network 112 comprises a wired, wireless, or combination of a wired and wireless LAN, MAN, WAN, and/or optical network (such as, an organization's intranet, local internets, the global-based Internet (including the WWW), private enterprise networks, or the like). As such, network termination system 102 utilizes backbone network 112 to communicate with another device or application external to multimedia distribution network 100. The device or application can be a server, web browser, operating system, other types of information processing software (such as, word processing, spreadsheets, financial management, or the like), television or radio transmitter, another transceiver system 104, another network termination system 102, or the like.

### II. Cable Modem Implementation

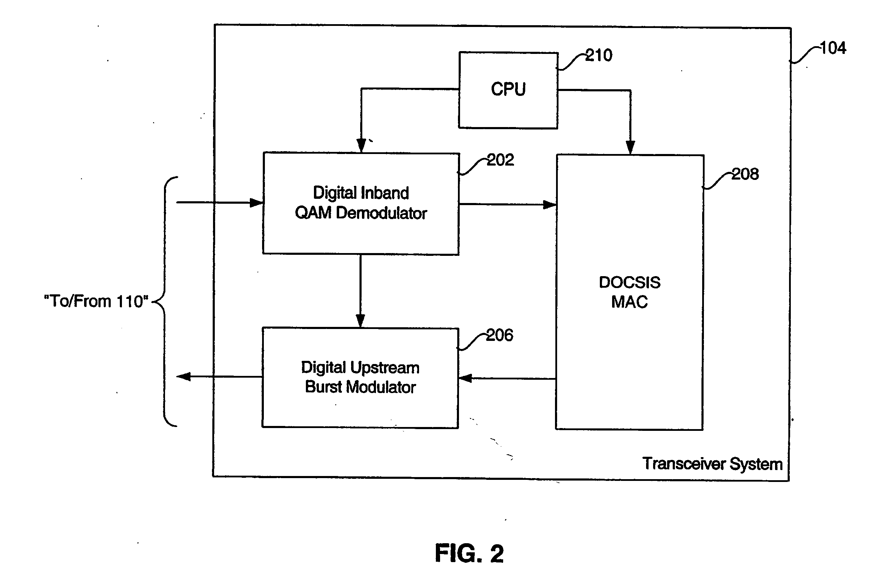

As discussed, transceiver system 104, in an embodiment, is part of a cable modem. FIG. 2 illustrates a cable modem implementation of transceiver system 104 according to an embodiment of the present invention. Transceiver system 104 includes a digital inband demodulator 202, a digital upstream burst modulator 206, a media access controller (MAC) 208, and a control processing unit (CPU) 210, collectively provided as a single integrated circuit.

Inband demodulator 202 receives the desired spectral frequencies from the downstream traffic of internodal infrastructure 110. In an embodiment, a tuner (not shown) receives modulated analog signals from internodal infrastructure 110 and passes the appropriate frequencies to inband demodulator 202. In embodiments, the analog signals include spectral characteristics in the frequency range of approximately 36-44 MHz or the broadband analog frequency range.

Inband demodulator 202 is a quadrature amplitude modulation (QAM) demodulator. In embodiments, a 1024, 256, or 64 QAM modulation technique is implemented to recover the underlying information signals from the received frequency signals.

After recovering the underlying information signals, inband demodulator 202 supplies the information signals to an analog-to-digital (A/D) converter (not shown). The A/D converter converts the underlying information signals from an analog form to digital form that includes network frames or packets of data. In an embodiment, such frames are formatted in accordance with an MPEG or MPEG-2 format. However, other coding formats are supported. The digital signals are parsed to extract computer network data and deliver the computer network data to MAC 208.

Upstream burst modulator 206 transmits frequency signals carrying upstream data. Upstream burst modulator 206 receives digital signals from MAC 208, and converts the digital signals into an analog form. The signals are modulated into a carrier signal in accordance with either a Quadrature Phase Shift Key (QPSK) or 256 QAM modulation technique. The modulated carrier signal is upconverted into a frequency signal in the appropriate range and transmitted over internodal infrastructure 110. In embodiments, the signal is transmitted within the frequency range of approximately 0-65 MHz.

MAC 208 supports upstream and downstream processing within transceiver system 104, and enables the distribution of voice, video, and data services to the subscriber or other end-users (not shown). MAC 208 also interacts with hardware and software portions of various network protocols. MAC 208 operates as the lower sublayer of the data link layer of transceiver system 104. In an embodiment, MAC 208 extracts voice, data, control messages, and/or the like, and supports methodologies and/or techniques for fragmentation, concatenation, cryptography, payload header suppression/expansion, and/or error checking for signals transported over the physical layer (i.e., internodal infrastructure 110). An example of a media access controller useful for implementation in the present invention is described in the application entitled "Highly Integrated Media Access Control" (U.S. Patent App Serial No. 10/254,764), which is incorporated herein by reference as though set forth in its entirety.

In an embodiment, MAC 208 operates to process incoming and outgoing digital data in accordance with the DOCSIS 1.1 specification. However, MAC 208 can be configured to support other protocol processes defined by the CableLabs® Certified™ Cable Modem project. For example, MAC 208, in an embodiment, includes an OpenCable™ compliant Point of Development interface as defined by the CableLabs® Certified™ Cable Modem project.

Although MAC 208 is described with reference to DOCSIS™ protocol processing, it should be understood that the present invention is intended to be inclusive of other types of communication protocols governing multimedia distribution networks. For example, in an embodiment, MAC 208 performs protocol processing defined by the Digital Audio-Video Council (DAVIC). In another embodiment (not shown), transceiver system 104 includes a first MAC 208 and a second MAC 208, and the first MAC 208 performs DOCSIS™ protocol processing while the second MAC 208 performs DAVIC protocol processing.

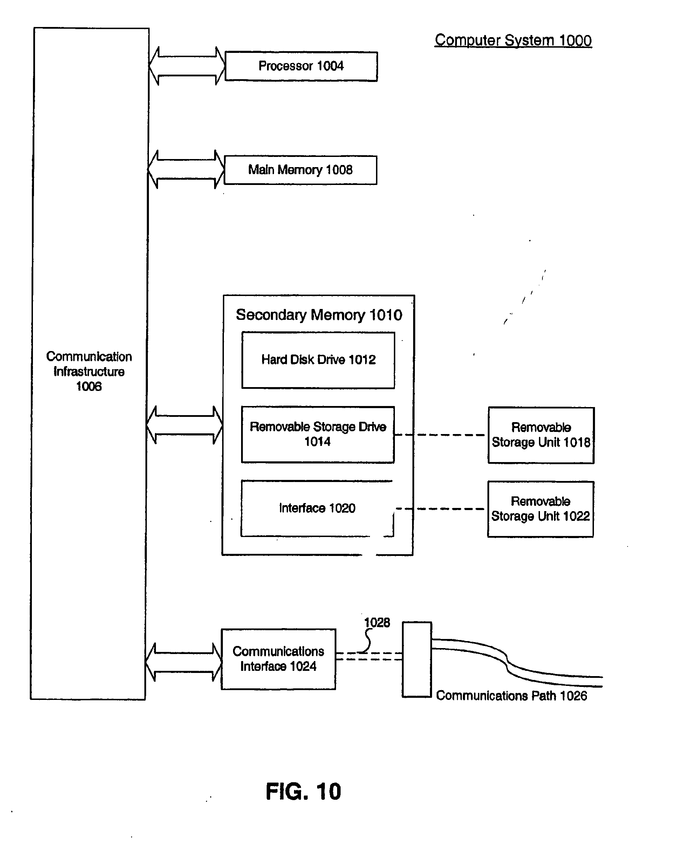

The functions of MAC 208 can be implemented in hardware, software, or a combination of both. Software functions of MAC 208 can be stored in either a main memory 1008 or a secondary memory 1010 and executed by a processor 1004, as described below with reference to FIG. 10.

In an embodiment, CPU 210 is a MIPS® processor. CPU 210 interacts with inband demodulator 202, upstream burst modulator 206, and MAC 208 to support digital television processing, including, but not limited to, enhanced, personal, and/or interactive television. CPU 210 receives control messages from a user input interface (not shown), such as a remote control unit, keyboard, pointing device, mouse, mouse wheel, joystick, rudder pedals, touch screen, microphone, stylus, light pen, voice recognition unit, or the like. CPU 210 provides control messages to inband demodulator 202 (and/or the tuner (not shown)) to select a downstream channel for receiving analog frequency signals. CPU 210 further provides control messages to MAC 208 to support requests for video, audio, and/or graphics data. CPU 210 can also enable transceiver system 104 to support personal video recording to internal or external memories. In an embodiment, CPU 210 includes or enables access to Advanced Technology Attachment (ATA) (formerly known as Integrated Drive Electronics (IDE)) controllers for connection to disc drives. In an embodiment, CPU 210 interfaces with a flash ROM.

### III. Set-Top Box Implementation

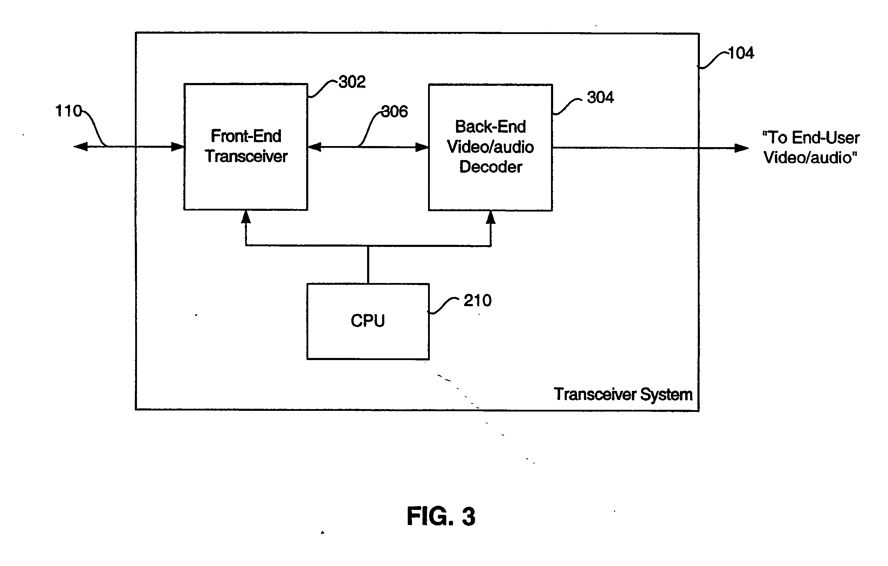

As discussed above, embodiments of the present invention include a cable modem disposed inside a set-top box system as a single integrated circuit. FIG. 3 illustrates a single-chip set-top box implementation of transceiver system 104, according to an embodiment of the present invention. Transceiver system 104 includes a front-end transceiver 302, a backend video/audio decoder 304, and CPU 210. Communications among the components are enabled by communication infrastructure 306, which can be a bus, crossover bar, or the like.

Front-end transceiver 302 transmits and receives signals over internodal infrastructure 110. In embodiments, the underlying information signals are recovered from analog frequency signals received from the downstream. The information signals are converted from analog to digital form. The digital signals are parsed to extract and deliver audio, video, and/or graphics data for digital television (also referred to herein as "cable television (CATV) programming data") to backend decoder 304. Conversely, front-end transceiver 302 accesses information signals intended for the upstream, and converts the signals from digital to analog form. The analog signals are upconverted into a frequency signal in the appropriate range and transmitted in an appropriate upstream channel of internodal infrastructure 110.

Backend decoder 304 supports audio and video decoding, two-dimensional and three-dimensional graphics processing, and mixed signal integration. In an embodiment, backend decoder 304 demultiplexes audio, video, and/or graphics from the downstream digital signals received from front-end transceiver 302. Backend decoder 304 also supports the enhanced, personal, and/or interactive television functionalities of the present invention.

CPU 210 interacts with front-end transceiver 302 and backend decoder 304 to support digital television processing, including, but not limited to, enhanced, personal, and/or interactive television. CPU 210 provides control messages to front-end transceiver 302 (and/or the tuner (not shown)) to select a downstream channel for receiving analog frequency signals. CPU 210 further provides control messages to backend decoder 304 to support requests for video, audio, and/or graphics data (such as, an electronic program guide (EPG), captioning data, and the like).

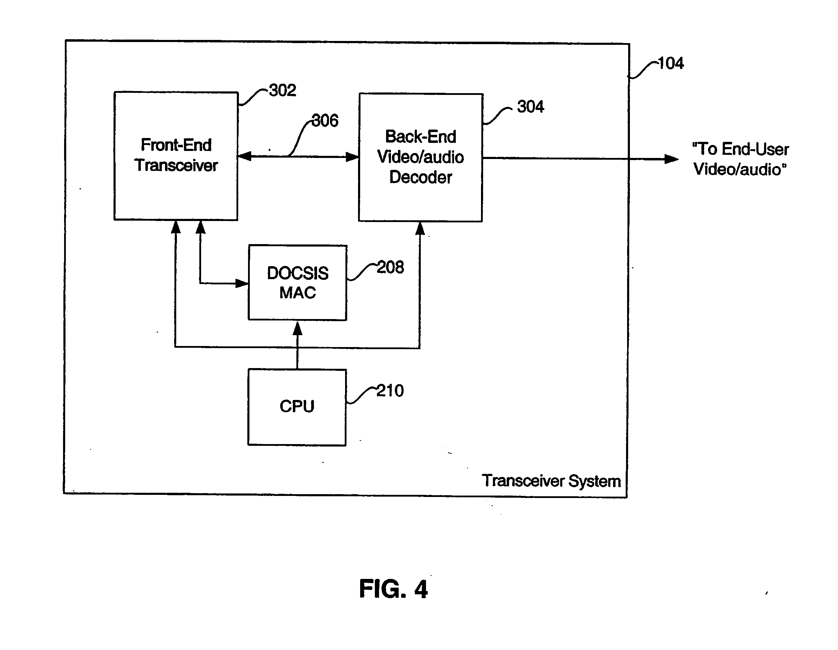

FIG. 4 illustrates another embodiment of a single-chip set-top box implementation of transceiver system 104. In accordance with FIG. 4, transceiver system 104 includes MAC 208, in addition to front-end transceiver 302, backend decoder 304, and CPU 210. Communication infrastructure 306 enables communications among the components. In an embodiment, front-end transceiver 302 parses downstream signals to separate computer network data from CATV programming data. The CATV programming data is delivered to backend decoder 304, and MAC 208 receives the computer network data.

As discussed, in an embodiment, MAC 208 is DOCSIS™-compliant. The DOCSIS™-compliant MAC 208 supports quality of service for broadband interactive services, such as VoIP and videoconferencing. In an embodiment, transceiver system 104 includes a dual tuner (not shown) that allows simultaneous viewing of either Internet and video (e.g., television video frames), two independent program streams for watching and recording (e.g. PVR, VCR, RW CD/DVD, etc.), or two independent program streams for picture-in-picture (PIP) functionalities. In an embodiment, transceiver system 104 allows any combination of "true" watch-and-record, PIP, and DOCSIS™ Internet browsing simultaneously. In an embodiment, transceiver system 104 allows any combination of watch-and-record, PIP, DOCSIS™ protocol processing, and DAVIC protocol processing all simultaneously.

For upstream communications, MAC 208 prepares and formats DOCSIS™ upstream data, voice packets, control messages, or the like. In an embodiment, MAC 208 interacts with CPU 210 to permit CATV control messages to be sent upstream to network termination system 102 for delivery to a transmitter or server for a broadcaster or other service provider. The CATV control messages from CPU 210 are integrated with the DOCSIS™ information (e.g., voice, data, control, etc.), and forwarded to front-end transceiver 302.

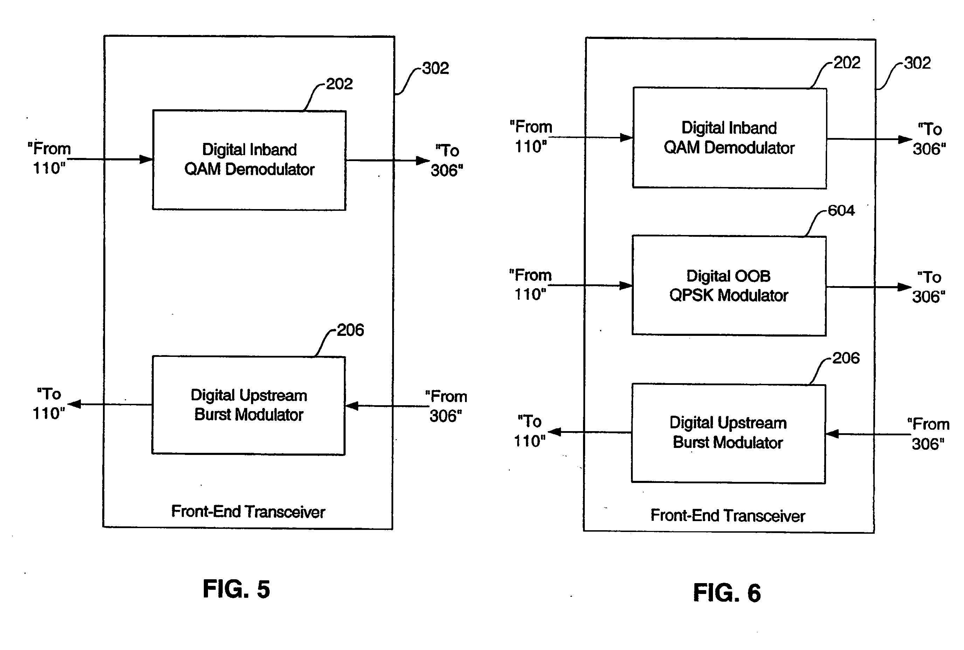

As discussed, front-end transceiver 302 enables transceiver system 104 to communicate with the upstream and downstream channels of internodal infrastructure 110. FIG. 5 illustrates an embodiment of front-end transceiver 302, comprising digital inband demodulator 202 and digital upstream burst modulator 206, as described above. FIG. 6 illustrates another embodiment of front-end transceiver 302, comprising digital inband demodulator 202, digital upstream burst modulator 206, and a digital out-of-band (OOB) demodulator 604. OOB demodulator 604 implements a QPSK modulation technique to demodulate a carrier signal to recover the underlying upstream information signals. In an embodiment, OOB demodulator 604 comprises a frequency agile oscillator that downconverts any channel in the 70-130 MHz frequency range to a surface acoustic wave (SAW)-centered intermediate frequency (IF) output. The desired channel is then sub-sampled by a 6-bit A/D converter at a rate that is more that four times the symbol rate. In another embodiment, OOB demodulator 604 receives signals within the frequency range of approximately 100-200 MHz LO with automatic gain control (AGC) and a 6-bit A/D converter. OOB demodulator 604 supports gigabit media independent interface (GMII interface) networks and forwards data to backend decoder 304.

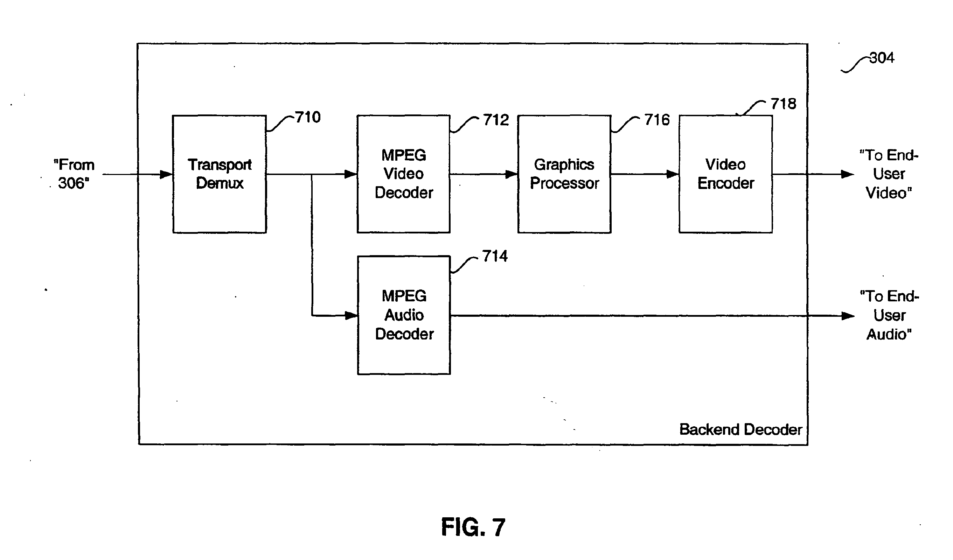

An embodiment of backend decoder 304 is illustrated in FIG. 7. As shown, backend decoder 304 includes a transport demultiplexer 710, a MPEG video decoder 712, a MPEG audio decoder 714, a graphics processor 716, and a video encoder 718. Transport demultiplexer 710 demultiplexes the downstream CATV programming data, and selectively outputs the digital data to MPEG video decoder 712, MPEG audio decoder 714, or CPU 210, depending on the programming data type (e.g., audio, video, graphic, control, etc.). In an embodiment, if the programming data type is indeterminate, transport demultiplexer 710 passes the digital data to CPU 210 for further processing.

MPEG video decoder 712 enables viewing of video frames, formatted for MPEG, MPEG-2, DVB, or the like. MPEG video decoder 712 decodes digital video data received from transport demultiplexer 710 or CPU 210. In an embodiment, CPU 210 provides signals that control the video decoding process, video output, vertical/horizontal hold, intensity, contrast, and the like.

MPEG audio decoder 714 decodes digital audio data received from transport demultiplexer 710 or CPU 210. MPEG audio decoder 714 enables sound to be integrated and synchronized with video frames outputted from MPEG video decoder 712. Additionally, MPEG audio decoder 714 supports audio clients, including radio or stereo broadcasts. MPEG audio decoder 714 supports formats for MPEG, MPEG-2, AC-3, or the like. In an embodiment, CPU 210 provides signals that control the audio decoding process, audio output, volume, and the like.

Graphics processor 716 supports advanced two-dimensional and/or three-dimensional graphic processing. Graphics processor 716 accesses graphics data from video decoder 712. Graphics data can include station logos, chroma-keyer data, or the like, that is superimposed over video from MPEG video decoder 712, and displayed on a television, monitor, PDA, portable computer, enhanced telephone, or the like.

Video encoder 718 receives a media stream from graphics processor 716. The media stream can include video from video decoder 712 that has been keyed by graphics processor 716. The media stream can also include video from video encoder 718 that does not include any graphics from graphics processor 716. The stream having no graphics would simply pass through graphics processor 716 from video decoder 716 to video encoder 718. Upon receipt of the video, video encoder 718 encodes the video for the end-user (e.g., television display).

### IV. Upstream and Downstream Processing on a Single Chip

As described herein, the present invention enables a single integrated chip (such as, transmitter system 104) to provide, at a minimum, voice, video, and data processing for a cable modem or set-top box system. The single integrated chip receives, decodes, and prepares digital audio-video frames that are presented on a display, such as a television, monitor, PDA, portable computer, enhanced telephone, or the like. The single integrated chip is also configured to perform DOCSIS™ protocol processing of computer network information. As such, the DOCSIS™ protocol processing permits videoconferencing, Internet browsing, IP telephony, electronic-messaging, and the like. Accordingly, the single integrated chip of the present invention supports digital television and DOCSIS™ processing for both upstream and downstream information.

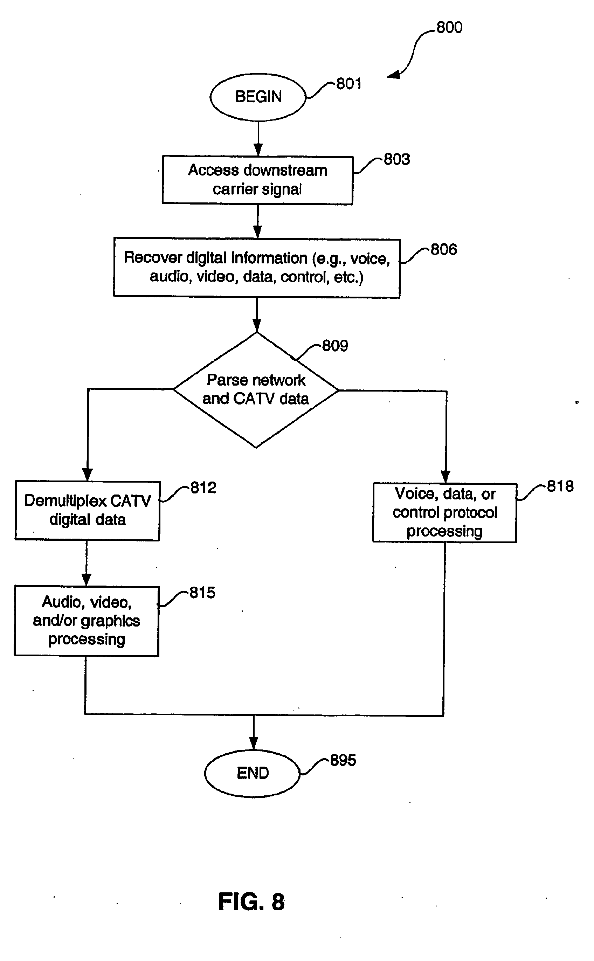

Referring to FIG. 8, flowchart 900 represents a general operational flow of an embodiment of the present invention with respect to downstream processing by a single integrated chip. More specifically, flowchart 900 shows an example of a control flow for accessing and processing downstream information for delivery to an end-user according to the present invention.

The control flow of flowchart 900 begins at step 801 and passes immediately to step 803. At step 803, a downstream carrier signal is accessed from a downstream channel by the single integrated chip (e.g., transceiver system 104). In embodiments, one or multiple tuners (not shown) are operable to receive downstream signals from a designated frequency range.

In regards to television programming data, an end-user operates an input interface (not shown) to select a broadcast channel for viewing on a display (not shown), such as a television, monitor, enhanced telephone, portable computer, etc. Control signals from the input interface are relayed to the tuner to designate a frequency channel corresponding to the selected broadcast channel. In an embodiment, a microprocessor (such as, CPU 210) receives the control signal from the input interface, and provides the appropriate commands to the tuner and/or a receiver (such as, front-end transceiver 302, or more specifically, inband demodulator 202). In embodiments using multiple tuners, the end-user can request multiple broadcast channels to be received for multiple, simultaneous viewing. For example, the end-user can request multiple channels to enable watch-and-record or PIP processing.

In an embodiment, one or more tuners are operable to receive downstream carrier signals from a predetermined frequency range, irrespective of end-user input. In an embodiment, network termination system 102 (such as, a CMTS) arbitrates bandwidth among a plurality of transceiver systems 104 (such as, a cable modem) and sends control messages (e.g., an upstream channel descriptor (UCD), a MAP Information Element (IE), or the like) to assign frequencies, time intervals, or the like to allocate bandwidth for communicating with each transceiver system 104. As such, in an embodiment, a tuner receives instructions from network termination system 102 via MAC 208 to operate within a designated frequency range.

In embodiments including multiple tuners, one or more tuners can be designated for digital television reception, watch-and-record, and/or PIP, and one or more tuners can be designated for protocol processing by a MAC (such as, MAC 208) to enable Internet browsing, IP telephony, videoconferencing, messaging, and/or the like.

At step 806, the downstream carrier signal is processed to recover underlying digital information. In an embodiment, a 1024, 256, or 64 QAM modulation technique is implemented to demodulate the carrier signal, and the underlying information from the signal is converted from analog to digital form. As discussed, the underlying digital information can include CATV programming data (e.g., audio, video, or graphics data for digital television). The underlying digital information can also include voice, audio-video, other data, and/or control messages for a computer network. In an embodiment, a MAC (such as, MAC 208) provides DOCSIS^{TM} protocol processing for the computer network information.

At step 809, the computer network information is separated from the CATV programming data. The computer network information is forwarded for protocol processing, and the CATV programming data is forwarded for digital television processing.

At step 812, the CATV programming data is desampled or demultiplexed to separate video, audio, and/or graphics data from the CATV programming data. In an embodiment, a transport demultiplexer (such as, transport demultiplexer 710) performs the desampling. In another embodiment, the desampling is performed by a microprocessor (such as, CPU 210).

At step 815, the video, audio and/or graphics data is processed for presentation, to an end-user, on a display, such as a television, monitor, PDA, enhanced telephone, portable computer, or the like. Video data is decoded and processed to prepare a video stream. Audio data is, likewise, decoded and processed to produce sound that is synchronized with the video stream. Finally, the graphics data is processed and integrated with the video stream to provide graphics overlays, such as station logos, closed-captioning, and/or the like. In an embodiment, audio data is processed and outputted to an audio client (such as, a radio, or speakers) for presentation with or without an accompanying video stream.

As discussed, computer network information extracted at step 809 is forwarded for protocol processing. At step 818, the computer network information is processed to extract control messages. Such control messages can include UCD messages that define upstream and downstream physical properties, including, but not limited to, channel definition (e.g., frequency, symbol rate, granularity of bandwidth allocation, or the like), burst type, modulation type (e.g., QPSK, QAM, or the like), differential encoding, preamble length and value, forward error correction (FEC) properties, scrambler properties, maximum burst size, guard time size, or the like. The control messages also can include MAP IEs that allocate bandwidth for sending upstream information. Voice and data (including audio-video frames) are also extracted from the computer network information. The voice and data packets are processed and forwarded to the end-user. In an embodiment, a MAC (such as, MAC 208) implements DOCSIS™ protocol processing to expand and read payload headers, perform error checking, deconcatenate payloads, reassemble fragmented packets, decrypt data, and/or the like.

After the downstream digital information has been forwarded by the single integrated chip (e.g., transceiver system 104) to a designated recipient (e.g., television, network computer, videoconferencing unit, telephone, PDA, or the like), the control flow ends as indicated at step 895.

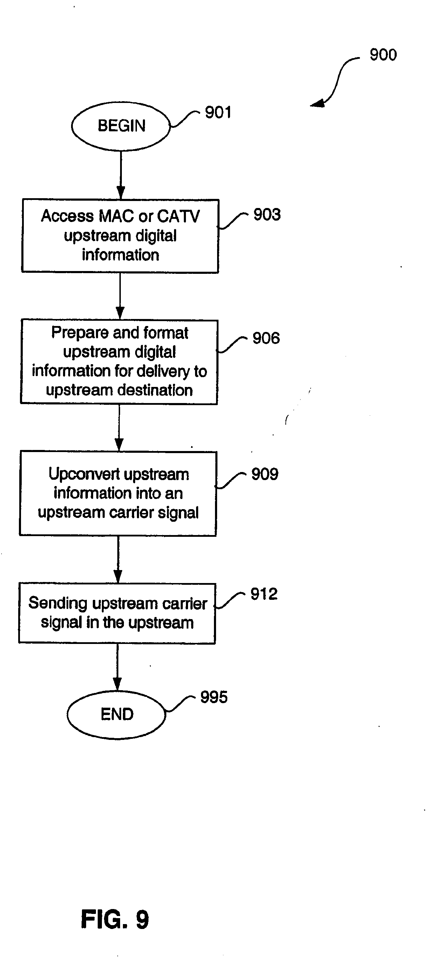

The single integrated chip (e.g., transceiver system 104) of the present invention is also operable to provide upstream processing. Referring to FIG. 9, flowchart 1000 represents a general operational flow of an embodiment of the present invention with respect to upstream processing by a single integrated chip. More specifically, flowchart 1000 shows an example of a control flow for accessing and processing upstream information for delivery to an upstream destination (e.g., network termination system 102) according to the present invention.

The control flow of flowchart 1000 begins at step 901 and passes immediately to step 903. At step 903, upstream digital information is accessed for upstream processing. In an embodiment, computer network information is delivered from a MAC client, such as a desktop/portable computer, digital television, enhanced telephone, PDA, videoconferencing equipment, video camcorder, or the like. Such computer network information can include voice and data (including audio-video data, browser requests, and/or the like) from a MAC client. Control messages that are related to the computer network information can also be produced and sent upstream. Such control messages can include a request to initiate a telephone or videoconferencing session, a request for additional bandwidth, and/or the like.

In an embodiment, control messages related to CATV programming are produced and sent upstream. CATV programming control messages can include requests for programming data related to, for example, a broadcast. Such related programming data can include text or captioning, a synopsis of the broadcast, EPG data, advertisement responses, pay-for-view requests, and/or the like. In an embodiment, a microprocessor (such as, CPU 210) receives the programming control messages from an end-user operating an input interface (e.g., remote control, keyboard, etc.).

At step 906, the computer network and/or CATV programming information is prepared and formatted for upstream transmission. In an embodiment, DOCSIS™ protocol processing is performed on the computer network information (e.g., voice, data, control messages, etc.). As discussed, such protocol processes can include fragmentation, concatenation, cryptography, payload header suppression, error checking, and/or the like. In an embodiment, a MAC (such as, MAC 208) receives the computer network information from the MAC client and/or produces MAC control messages, and implements the DOCSIS™ protocol processing.

In an embodiment, a MAC (such as, MAC 208) receives the programming control messages from a microprocessor (such as, CPU 210) and integrates the programming control messages with the computer network information. In accordance with rules and policies set by a network headend (such as, network termination system 102 (e.g., CMTS)), a MAC (such as, MAC 208) prepares a burst to send the computer network and/or CATV programming information in an assigned slot structure.

At step 909, the computer network and/or CATV programming information is converted from digital to analog form. The analog data is upconverted into a modulated, analog carrier signal in a designated frequency range. At step 912, the upstream carrier signal is sent upstream, for example, to network termination system 104. After the upstream carrier signal has been sent upstream, the control flow ends as indicated at step 995.

### V. Exemplary System Implementation

As discussed above, transceiver system 104, in embodiments, comprises a single integrated circuit. As such, each component of transceiver system 104, as described above with reference to FIGs. 1-10, is formed on or into a single microchip that is mounted on a single piece of substrate material, printed circuit board, or the like. In an embodiment, one or more components of transceiver system 104 are formed on or into a distinct secondary circuit chip (also referred to as a "daughter chip"), and later mounted on a primary integrated circuit chip. Thus, the primary chip is a single package containing all components of transceiver system 104, which includes one or more daughter chips.

Additionally, FIGs. 1-10 are conceptual illustrations allowing an explanation of the present invention. It should be understood that embodiments of the present invention could be implemented in hardware, firmware, software, or a combination thereof. In such an embodiment, the various components and steps would be implemented in hardware, firmware, and/or software to perform the functions of the present invention. That is, the same piece of hardware, firmware, or module of software could perform one or more of the illustrated blocks (i.e., components or steps).

Components or steps of the present invention can be implemented in one or more computer systems capable of carrying out the functionality described herein. Referring to FIG. 10, an example computer system 1000 useful in implementing the present invention is shown. Various embodiments of the invention are described in terms of this example computer system 1000. After reading this description, it will become apparent to one skilled in the relevant art(s) how to implement components or steps of the present invention using other computer systems and/or computer architectures.

The computer system 1000 includes one or more processors, such as processor 1004. Processor 1004 can be a special purpose or a general purpose digital signal processor. Processor 1004 is connected to a communication infrastructure 1006 (e.g., a communications bus, crossover bar, or network). Various software implementations are described in terms of this exemplary computer system. After reading this description, it will become apparent to a one skilled in the relevant art(s) how to implement the components or steps of the present invention using other computer systems and/or computer architectures.

Computer system 1000 also includes a main memory 1008, preferably random access memory (RAM), and can also include a secondary memory 1010. The secondary memory 1010 can include, for example, a hard disk drive 1012 and/or a removable storage drive 1014, representing a floppy disk drive, a magnetic tape drive, an optical disk drive, etc. The removable storage drive 1014 reads from and/or writes to a removable storage unit 1018 in a well-known manner. Removable storage unit 1018 represents a floppy disk, magnetic tape, optical disk, etc. As will be appreciated, the removable storage unit 1018 includes a computer usable storage medium having stored therein computer software (e.g., programs or other instructions) and/or data.

In alternative implementations, secondary memory 1010 includes other similar means for allowing computer software and/or data to be loaded into computer system 1000. Such means include, for example, a removable storage unit 1022 and an interface 1020. Examples of such means include a program cartridge and cartridge interface (such as that found in video game devices), a removable memory chip (such as, an EPROM or PROM) and associated socket, and other removable storage units 1022 and interfaces 1020 which allow software and data to be transferred from the removable storage unit 1022 to computer system 1000.

Computer system 1000 can also include a communications interface 1024. Communications interface 1024 allows software and/or data to be transferred between computer system 1000 and external devices. Examples of communications interface 1024 include a modem, a network interface (such as an Ethernet card), a communications port, a PCMCIA slot and card, etc. Software and data transferred via communications interface 1024 are in the form of signals 1028 which can be electronic, electromagnetic, optical, or other signals capable of being received by communications interface 1024. These signals 1028 are provided to communications interface 1024 via a communications path (i.e., channel) 1026. Communications path 1026 carries signals 1028 and can be implemented using wire or cable, fiber optics, a phone line, a cellular phone link, an RF link, free-space optics, and/or other communications channels.

In this document, the terms "computer program medium" and "computer usable medium" are used to generally refer to media such as removable storage unit 1018, removable storage unit 1022, a hard disk installed in hard disk drive 1012, and signals 1028. These computer program products are means for providing software to computer system, 1000. The invention, in an embodiment, is directed to such computer program products.

Computer programs (also called computer control logic or computer readable program code) are stored in main memory 1008 and/or secondary memory 1010. Computer programs can also be received via communications interface 1024. Such computer programs, when executed, enable the computer system 1000 to implement the present invention as discussed herein. In particular, the computer programs, when executed, enable the processor 1004 to implement processes of the present invention, such as the method(s) implemented using components of transceiver system 104, including, for example, decoder 304, CPU 210, etc., described above, such as steps of methods 900, and/or 1000, for example. Accordingly, such computer programs represent controllers of the computer system 1000.

In an embodiment where the invention is implemented using software, the software can be stored in a computer program product and loaded into computer system 1000 using removable storage drive 1014, hard drive 1012, interface 1020, or communications interface 1024. The control logic (software), when executed by the processor 1004, causes the processor 1004 to perform the functions of the invention as described herein.

In another embodiment, the invention is implemented primarily in hardware using, for example, hardware components such as application specific integrated circuits (ASICs). Implementation of the hardware state machine so as to perform the functions described herein will be apparent to one skilled in the relevant art(s).

In yet another embodiment, the invention is implemented using a combination of both hardware and software.

While various embodiments of the present invention have been described above, it should be understood that they have been presented by way of example, and not limitation. It will be apparent to one skilled in the relevant art(s) that various changes in form and detail can be made therein without departing from the spirit and scope of the invention. Moreover, it should be understood that the present invention could be implemented in any multi-nodal communications environment governed by centralized nodes. The nodes include, but are not limited to, cable modems, set-top boxes, and headends, as well as communication gateways, switches, routers, Internet access facilities, servers, personal computers, enhanced telephones, personal digital assistants (PDA), televisions, or the like. Thus, the present invention should not be limited by any of the above-described exemplary embodiments, but should be defined only in accordance with the following claims and their equivalents.

## Claims

1. A single integrated circuit for processing information within a multimedia distribution network, comprising:
a digital inband demodulator for receiving an incoming signal, wherein said inband demodulator is coupled to the integrated circuit;
a digital upstream modulator for enabling transmission of an outgoing signal, wherein said upstream modulator is coupled to the integrated circuit; and
a media access controller for enabling DOCSIS protocol processing of said incoming signal and/or said outgoing signal, wherein said media access controller is coupled to the integrated circuit.

2. The single integrated circuit of claim 1, wherein at least one of said inband demodulator, said upstream modulator, and said media access controller is embedded within the circuitry of the integrated circuit.

3. The single integrated circuit of claim 1, wherein at least one of said inband demodulator, said upstream modulator, and said media access controller is attached to the integrated circuit.

4. A single integrated circuit for processing information within a multimedia distribution network, comprising:
a digital inband demodulator for receiving an incoming signal, wherein said inband demodulator is coupled to the integrated circuit;
a digital upstream modulator for enabling transmission of a first outgoing signal, wherein said upstream modulator is coupled to the integrated circuit;
a digital out-of-band demodulator for receiving an incoming out-of-band signal, wherein said out-of-band demodulator is coupled to the integrated circuit; and
a media access controller for enabling DOCSIS protocol processing of said incoming signal, said first outgoing signal, and said second outgoing signal, wherein said media access controller is coupled to said integrated circuit.

5. A single integrated circuit processing information within a multimedia distribution network, comprising:
a front-end transceiver for receiving an incoming signal and/or sending an outgoing signal, wherein said front-end transceiver is coupled to the integrated circuit;
a backend decoder for processing audio, video, and/or graphics information carried in said incoming signal, wherein said backend decoder is coupled to the integrated circuit; and
a media access controller for enabling DOCSIS protocol processing of said incoming signal and said outgoing signal, wherein said media access controller is coupled to the integrated circuit.

6. The single integrated circuit of claim 5, wherein said front-end transceiver comprises:
a digital inband demodulator for receiving said incoming signal.

7. A single integrated circuit for processing information within a multimedia distribution network, comprising:
a front-end transceiver for receiving an incoming signal and/or sending an outgoing signal, wherein said front-end transceiver is coupled to the integrated circuit;
a backend decoder for processing audio, video, and/or graphics information carried in said incoming signal, wherein said backend decoder is coupled to the integrated circuit;
a media access controller for enabling DOCSIS protocol processing of said incoming signal and said outgoing signal, wherein said media access controller is coupled to the integrated circuit; and
a microprocessor for providing control signals to said front-end transceiver and/or said backend decoder, wherein said microprocessor is coupled to the integrated circuit.

8. A method for processing information within a single integrated circuit, wherein said integrated circuit is enabled to communicate over a multimedia distribution network, comprising the steps of:
demodulating an incoming signal accessed from a downstream channel of the multimedia distribution network;
enabling DOCSIS protocol processing of said incoming signal subsequent to said demodulating step; and
enabling DOCSIS protocol processing of an outgoing signal; and
modulating said outgoing signal for transmission over an upstream channel of the multimedia distribution network.

9. The method of claim 8, further comprising the step of:
processing audio, video, and/or graphics information carried in said incoming signal.

10. The method of claim 8, further comprising the steps of:
enabling presentation of a media stream including said audio, video, and/or graphics information on an end-user device.
